(19) Europäisches Patentamt
European Patent Office
Office européen des brevets

(11) **EP 3 599 485 B1**

(12) **EUROPÄISCHE PATENTSCHRIFT**

(45) Veröffentlichungstag und Bekanntmachung des Hinweises auf die Patenterteilung:
**27.03.2024 Patentblatt 2024/13**

(21) Anmeldenummer: **18184937.3**

(22) Anmeldetag: **23.07.2018**

(51) Internationale Patentklassifikation (IPC):
*G01S 13/22* (2006.01)   *G01S 7/4861* (2020.01)
*G01S 7/4865* (2020.01)   *G01S 17/10* (2020.01)

(52) Gemeinsame Patentklassifikation (CPC):
**G01S 17/10; G01S 7/4861; G01S 7/4865;**
G01S 13/227

(54) **VERFAHREN UND VORRICHTUNG ZUR OPTISCHEN DISTANZMESSUNG**

METHOD AND DEVICE FOR OPTICALLY MEASURING DISTANCES

PROCÉDÉ ET DISPOSITIF DE MESURE DE DISTANCE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.01.2020 Patentblatt 2020/05**

(73) Patentinhaber: **MicroVision, Inc.**
**Redmond, WA 98052 (US)**

(72) Erfinder:
• **BIRNBACHER, Wolfgang**
**22143 Hamburg (DE)**
• **RÜHAAK, Jan**
**22143 Hamburg (DE)**

(74) Vertreter: **RGTH**
**Patentanwälte PartGmbB**
**Neuer Wall 10**
**20354 Hamburg (DE)**

(56) Entgegenhaltungen:
**EP-A1- 3 285 087      WO-A1-2006/063740**
**DE-A1- 4 303 804      DE-A1-102013 002 651**
**US-A1- 2016 291 138**

EP 3 599 485 B1

**Beschreibung**

**Technisches Gebiet**

Die Erfindung betrifft ein Verfahren sowie eine Vorrichtung zur optischen Distanzmessung.

**Stand der Technik**

Optische Distanzmessungen, insbesondere zur Anwendung in der fahrerlosen Navigation von Fahrzeugen, sind aus dem Stand der Technik bekannt. Sie beruhen auf dem Time-of-Flight-Prinzip, wobei zur Messung ein scannender Sensor, insbesondere ein LIDAR (Abkürzung für "Light Detection and Ranging")-Sensor eingesetzt wird, der periodisch Messpulse aussendet, die an Objekten reflektiert werden, wobei die reflektierten Messpulse detektiert werden. Aus der Bestimmung der Laufzeit der Messpulse von dem Sensor zu den Objekten und zurück kann mithilfe der Lichtgeschwindigkeit auf die Distanz zu diesen Objekten geschlossen werden.

WO 2006/063740 A1 offenbart ein Einkanal-Heterodyn-Distanzmessverfahren, das elektromagnetische Strahlung mit zwei unterschiedlichen Frequenzen verwendet.

DE 4 303 804 A1 beschreibt eine Einrichtung zur Entfernungsmessung.

Ein wesentlicher Nachteil bei den aus dem Stand der Technik bekannten Verfahren ist jedoch, dass die Messpulse nicht beliebig schnell hintereinander ausgesandt werden können, da dann keine klare Zuordnung der Reflektion möglich ist.

Bei einem zu schnellen Aussenden der Messpulse entstehen Aliasing-Effekte. Dies bedeutet, dass das Verfahren ein Objekt nicht nur an der korrekten tatsächlichen Objektposition erkennt, sondern aufgrund der falschen Zuordnung von ausgesandten Messpulsen und reflektierten Messpulsen das Objekt auch an falschen Objektpositionen als sogenannte Ghost-Objekte erkannt wird.

Ferner kann die Laufzeit des Messpulses, das heißt die Zeit, die ein Messpuls braucht, bis er wieder den Sensor erreicht, nicht verkürzt werden, da sich die Messpulse mit Lichtgeschwindigkeit bewegen. Um also einen weit entfernten Distanzbereich abzutasten, muss nach dem Emittieren eines Messpulses die doppelte Laufzeit bis zu der am weitesten entfernten, möglichen Objektposition abgewartet werden, bis ein weiterer Messpuls ausgesandt werden kann.

In Folge ist die Anzahl der Messungen pro Zeit stark begrenzt, da stets die doppelte Laufzeit zwischen der Vorrichtung zur Durchführung eines Messverfahrens und der maximal möglichen Objektposition abgewartet werden muss.

**Darstellung der Erfindung: Aufgabe, Lösung, Vorteile**

Der Erfindung liegt die Aufgabe zugrunde ein Verfahren sowie eine Vorrichtung zur Distanzmessung derart zu verbessern, dass im Vergleich zum Stand der Technik Messpulse mit einem geringeren Abstand als die doppelte Laufzeit bis zu einer möglichen maximal entfernten Objektposition ausgesandt werden können, wobei dennoch die tatsächliche Objektposition eindeutig und korrekt bestimmt werden kann. In anderen Worten sollen Messpulse zeitlich näher ausgesandt werden, wobei Aliasing-Effekte ausgeschlossen werden sollen.

Gelöst wird die oben genannte Aufgabe durch das erfindungsgemäße Verfahren zur optischen Distanzmessung. Das Verfahren umfasst das Aussenden einer Vielzahl von Messpulsen, die Reflektion von ausgesandten Messpulsen an mindestens einem Objekt in einem Messbereich und das Empfangen von reflektierten Messpulsen. Der Messbereich weist eine Länge auf.

Bei dem von dem Objekt reflektierten Messpuls handelt es sich um einen Messpuls, der zuvor ausgesendet wurde, sodass sich durch die Reflektion an dem Objekt seine Ausbreitungsrichtung verändert hat. Man kann den reflektierten Messpuls somit als Echo des ausgesendeten Messpulses verstehen. Insbesondere wird mittels des Verfahrens die Laufzeit der Messpulse zu den Objekten, an denen diese reflektiert wurden, ermittelt und aus dieser mithilfe der Lichtgeschwindigkeit die von dem jeweiligen Messpuls zurückgelegte Distanz zu dem Objekt bestimmt.

Eine optische Distanzmessung zeichnet sich dadurch aus, dass unter Ausnutzung von optischen Signalen, hier optischen Messpulsen, Distanzen bestimmt werden. Unter dem Begriff "Distanz" ist eine Entfernung zu verstehen. Unter der vom Messpuls zurückgelegten Distanz ist die Strecke zwischen einer Sendeeinheit, die den Messpuls ausgesandt hat, und dem Objekt, das diesen reflektiert hat, plus der Strecke zwischen dem Objekt und der Empfangseinheit, das den entsprechenden reflektierten Messpuls empfangen hat, zu verstehen. Insbesondere umfasst das Verfahren die Berücksichtigung der genauen Position der Sendeeinheit und der Empfangseinheit, insbesondere in Relation zueinander.

Da es sich bei dem mindestens einen Objekt typischerweise um ein dreidimensionales Objekt handelt, sodass einige Bereiche des Objektes näher und andere Bereiche des Objektes weiter entfernt angeordnet sein können, ist mit dem Begriff "Distanz zu dem Objekt" die Entfernung zu zumindest einer Stelle des Objektes gemeint, und zwar der Stelle, auf die der Messpuls aufgetroffen und an der diese reflektiert wurde. Mit Laufzeit ist die Zeit zu verstehen, die der Messpuls für die zuvor beschriebene Distanz gebraucht hat. Das Verfahren dient vor allem zur Distanzmessung zur Anwendung in der fahrerlosen Navigation von Fahrzeugen.

Bei einem Messpuls handelt es sich insbesondere um ein optisches, insbesondere elektromagnetisches, Signal. Der Messpuls hat vorzugsweise eine Wellenlänge, die nicht aus dem für das menschliche Auge sichtbaren Bereich stammt. Vorzugsweise wird aus Sicherheitsgründen unsichtbares Infrarot verwendet. Bevorzugterweise weist ein Messpuls eine Pulsbreite auf, sodass man den Messpuls als eine zeitlich begrenzte Portion elektromagnetischer Strahlung verstehen kann. Da es sich beim Messpuls um ein elektromagnetisches Signal handelt und somit die Geschwindigkeit des Messpulses bekannt ist, kann aus der Laufzeit eines Messpulses mithilfe der Lichtgeschwindigkeit darauf geschlossen werden, welche Strecke der Messpuls in der Laufzeit hinter sich gebracht hat.

Es werden N Untergruppen von Messpulsen ausgesandt, wobei der Buchstabe N für eine natürliche Zahl steht. Insbesondere werden mindestens zwei, vorzugsweise mindestens drei, am meisten bevorzugt mindestens vier, Untergruppen von Messpulsen ausgesandt. Jede Untergruppe weist einen konstanten Pulsabstand auf. Unter dem Begriff "Pulsabstand" ist der räumliche Abstand benachbarter Messpulse derselben Untergruppe zum selben Zeitpunkt zu verstehen. Dies lässt natürlich Schlussfolgerungen auf den zeitlichen Abstand zu, da die Geschwindigkeit der Pulse konstant und gleich ist. Dadurch, dass jede Untergruppe einen konstanten Pulsabstand aufweist, sind sämtliche benachbarte Messpulse der Untergruppe räumlich und auch zeitlich gleich weit voneinander entfernt.

Der konstante Pulsabstand verschiedener Untergruppen unterscheidet sich voneinander. Jede Untergruppe ist somit durch den Pulsabstand benachbarter Messpulse der Untergruppe eindeutig von den anderen Untergruppen zu unterscheiden.

Das kleinste gemeinsame Vielfache der konstanten Pulsabstände der N Untergruppen entspricht mindestens der zweifachen Länge des Messbereichs. Das heißt, dass das kleinste gemeinsame Vielfache der konstanten Pulsabstände größer oder gleich der Länge des Messbereichs mal zwei ist.

Die konstanten Pulsabstände werden typischerweise durch Angabe einer Zahl und einer Maßeinheit festgelegt. Dabei handelt es sich bei der Zahl vor allem um eine natürliche Zahl. Dabei wird die Maßeinheit vor allem durch den räumlichen Abstand zwei benachbarter Pulse einer Untergruppe spezifiziert. Jede Untergruppe ist somit eindeutig durch eine Zahl, die den konstanten Pulsabstand definiert, bestimmt.

Beim Bestimmen des kleinsten gemeinsamen Vielfachen der konstanten Pulsabstände werden lediglich die entsprechenden Zahlen berücksichtigt, während die Maßeinheiten außen vor gelassen werden. Dabei wird zuvor allerdings sichergestellt, dass die konstanten Pulsabstände in derselben Maßeinheit vorliegen, da dies natürlich Einfluss auf die entsprechenden Zahlen hat. Bspw. hat eine erste Untergruppe einen konstanten Pulsabstand von 2 Distanzeinheiten, während eine zweite Untergruppe einen konstanten Pulsabstand von 3 Distanzeinheiten aufweist. Das kleinste gemeinsame Vielfache ist hier 6, d.h. mit Maßeinheit, 6 Distanzeinheiten. Auch muss vor einem Vergleich mit der zweifachen Länge des Messbereichs zuvor sichergestellt sein, dass die zweifache Länge in derselben Maßeinheit wie die konstanten Pulsabstände vorliegt.

Statt Untergruppen mit verschiedenen konstanten Pulsabständen zu wählen, kann das Verfahren auch so verstanden werden, dass immer die doppelte Laufzeit zum Durchlaufen der Länge eines Messbereichs verstreichen muss, wobei bei den Untergruppen die Messbereichslänge künstlich hypothetischerweise verkürzt wird um kürzere konstante Pulsabstände zu erhalten. In anderen Worten kann man jeder Untergruppe eine Teildistanz der Länge des Messbereichs zuordnen, wobei nach dem Durchlaufen der doppelten Teildistanz ein neuer Messpuls versandt wird. Die Teildistanz entspricht somit der Hälfte des jeweiligen konstanten Pulsabstandes. Das kleinste gemeinsame Vielfache dieser Teildistanzen ist größer oder gleich der Länge des Messbereichs.

Vorzugsweise sind die konstanten Pulsabstände jeweils kleiner als die zweifache Länge des Messbereichs. Wiederum müssen für den Vergleich die konstanten Pulsabstände und die zweifache Länge des Messbereichs in derselben Maßeinheit vorliegen. In anderen Worten kann der doppelten Länge des Messbereichs eine Laufzeit zugeordnet werden. Diese Laufzeit entspricht insbesondere genau der Laufzeit, die ein Messpuls zum Zurücklegen der zweifachen Länge des Messbereichs benötigt. Dadurch, dass die Geschwindigkeit der Messpulse eindeutig durch die Lichtgeschwindigkeit definiert ist und die Länge des Messbereichs festgelegt ist, ist auch die Laufzeit eindeutig bestimmt. Die konstanten zeitlichen Pulsabstände der Untergruppen sind somit jeweils kleiner als die Laufzeit. Es werden somit bewusst Messpulse wesentlich zeitnäher als aus dem Stand der Technik bekannt ausgesandt, wobei gleichzeitig durch das Merkmal, dass das kleinste gemeinsame Vielfache der konstanten Pulsabstände der N Untergruppen mindestens der zweifachen Länge des Messbereiches entspricht, ausgeschlossen wird, dass eine Zweideutigkeit hinsichtlich der Objektposition resultiert.

Unter dem Begriff "Messbereich" ist vor allem ein dreidimensionaler Bereich gemeint, aus dem Reflektionen der ausgesandten Messpulse empfangen werden können und/oder sollen. In anderen Worten ist unter dem Begriff ein zu messender Bereich zu verstehen. Der Messbereich muss nicht technisch bedingt sein, sondern kann bewusst gewählt werden. Er ist somit ein Bereich, der mittels des erfindungsgemäßen Verfahrens "vermessen", in anderen Worten abgetastet, werden soll. Der Messbereich wird durch ein Sichtfeld und einen Distanzbereich definiert. Der Distanzbereich erstreckt sich vorzugsweise in Strahlenausbreitungsrichtung ausgehend von einer Vorrichtung zur Distanzmessung und zwar um die oben genannte Länge.

Das Sichtfeld kann durch zwei Winkelsektoren in zwei Ebenen aufgespannt sein, die senkrecht zueinander stehen. In einer dieser Ebenen, d.h. zweidimensional, kann das Sichtfeld als Winkelsektor verstanden werden, d.h. einem Kreissektor ohne Begrenzung durch einen Kreisbogen. In anderen Worten wird der Winkelsektor ausschließlich durch zwei Kreisradien ausgehend von der Vorrichtung begrenzt. Dreidimensional bildet das Sichtfeld eine sich in Strahlenausbreitungsrichtung ins Unendliche erstreckende Pyramide. Durch die begrenzte Länge wird diese unendlich lange Pyramide in ihrer Höhe eingeschränkt, sodass der Messbereich gebildet wird. Der Boden, d.h. die Grundfläche, der Pyramide ist dabei vorzugsweise gewölbt oder plan ausgebildet.

Die Länge erstreckt sich von einem Anfangsbereich des Messbereichs in Strahlenausbreitungsrichtung bis zu einem Endbereich des Messbereichs. Beginnt der Messbereich direkt an der Vorrichtung, liegt dort der Anfangsbereich, während sich der Endbereich in einer Distanz von der Vorrichtung entfernt befindet, die der Länge entspricht. Alternativ kann der Messbereich entfernt von der Vorrichtung angeordnet sein. Dies bedeutet, dass auch der Anfangsbereich in einem Abstand zur Vorrichtung in Strahlenausbreitungsrichtung angeordnet ist. In einem solchen Fall ist der Messbereich in Form eines Pyramidenstumpfes ausgebildet, mit einer vorzugsweise gewölbten oder planen Grundfläche und einer vorzugsweise gewölbten oder planen Deckfläche.

Da die Vorrichtung zur Durchführung des Verfahrens vorzugsweise eine Sendeeinheit umfasst, insbesondere eine Sendematrix, kann der Messbereich in seinem Anfangsbereich (auch in dem Fall, dass der Messbereich direkt an der Vorrichtung beginnt) auch als Pyramidenstumpf ausgebildet sein, wobei die Deckfläche durch die eine sendende Oberfläche der Sendeeinheit der Vorrichtung gebildet ist.

Vorzugsweise kann der Messbereich mehrere Längen aufweisen, die sich allesamt vom Anfangsbereich des Messbereichs zum Endbereich erstrecken. Dabei ist das kleinste gemeinsame Vielfache der konstanten Pulsabstände zumindest so groß wie das Zweifache einer dieser Längen. Vorzugsweise trifft dies auf alle Längen zu. Insbesondere treffen alle genannten Vergleiche mit einer zweifachen Länge oder einfachen Länge des Messbereichs auf alle Längen des Messbereichs zu.

Erfindungsgemäß umfasst das Verfahren das Ermitteln möglicher Objektpositionen für jeden reflektierten Messpuls sowie eine Akkumulation aller möglichen Objektpositionen in einem Histogramm. Es werden somit für jeden reflektierten Messpuls mögliche Objektpositionen bestimmt. Mögliche Objektpositionen ergeben sich insbesondere durch Zuordnung des reflektierten Messpulses zu ausgesandten Messpulsen. Es wird somit für jeden reflektierten Messpuls bestimmt, welchem ausgesandten Messpuls dieser gegebenenfalls zugeordnet werden kann. Da die Position des Objektes nicht bekannt ist, ergeben sich hier eine Reihe von Möglichkeiten, die jeweils in einer möglichen Objektposition resultieren. Unter dem Begriff "Objektposition" ist vor allem eine Objektdistanz, d.h. Distanz zwischen einer Vorrichtung zum Durchführen des Verfahrens und einem Objekt zu verstehen.

Für jeden reflektierten Messpuls wird somit bestimmt, welchem ausgesandten Messpuls dieser reflektierte Messpuls zugeordnet werden kann. Da die konstanten Pulsabstände jeweils kleiner als die Laufzeit sind, die der zweifachen Länge des Messbereichs zugeordnet werden kann, kann jedem Messpuls eine Vielzahl von ausgesandten Messpulsen zugeordnet werden. Es entsteht somit eine Vielzahl von möglichen Laufzeiten, die der reflektierte Messpuls zurückgelegt haben kann, je nachdem, welchem ausgesandten Messpuls er zugeordnet wird.

Anhand der ermittelten Laufzeiten werden mögliche Objektpositionen des Objektes, an dem der Messpuls reflektiert wurde, ermittelt. Diese möglichen Objektpositionen werden in einem Histogramm akkumuliert. Erfindungsgemäß werden alle möglichen Objektpositionen aller Messpulse der N Untergruppen in einem einzigen Histogramm akkumuliert. Ferner kann ein (Teil)-Histogramm pro Untergruppe erstellt werden.

Das Histogramm weist eine X-Achse auf, die die Objektposition bestimmt. In anderen Worten ist auf der X-Achse die Position ausgehend von einem Anfang des Messbereichs bis zu einem Ende des Messbereichs dargestellt. Der Abstand zwischen Anfang und Ende entspricht der Länge des Messbereichs. Auf der Y-Achse werden die möglichen Objektpositionen, die zuvor für jeden reflektierten Messpuls ermittelt wurden, eingetragen. Jede mögliche Objektposition wird als ein "Event" in das Histogramm eingetragen. In anderen Worten handelt es sich bei dem Verfahren um eine Time-of-Flight-Messung mit eventbasierter Histogrammbildung. Insbesondere handelt es sich bei dem Verfahren zur optischen Distanzmessung um eine zeitkorrelierte Einzelphotonenzählung (Abkürzung: TCSPC-Abstandsmessung). Dies bedeutet, dass in vielen Integrationsdurchläufen ein Histogramm mit Events gefüllt wird. Dabei ist ein Event eine mögliche Objektposition eines empfangenen Messpulses. Die Qualität der Messung wird insbesondere erhöht, je mehr Messungen durchgeführt werden.

Ferner werden sämtliche mögliche Objektpositionen aller Messungen aller Untergruppen in einem Histogramm dargestellt. Dies kann durch Zusammenführen der einzelnen Histogramme der verschiedenen Untergruppen durch Aufaddieren dieser geschehen. Vorteilhafterweise kann von vornherein ein einziges Histogramm umfassend alle möglichen Objektpositionen aller Untergruppen erstellt werden.

Aufgrund der Tatsache, dass das kleinste gemeinsame Vielfache der konstanten Pulsabstände der N Untergruppen mindestens der zweifachen Länge des Messbereichs entspricht, wird erreicht, dass nach Durchführung des Verfahrens, und somit der Akkumulation einer möglichen Objektposition für jeden reflektierten Messpuls der N Untergruppen von Messpulsen in einem einzigen Histogramm, nur an der tatsächlichen Objektposition ein Maximum des Histogramms entsteht. Falsche Objektpositionen, die auf einer falschen Zuordnung von reflektiertem Messpuls und ausgesandtem Messpuls resultieren, werden zwar auch im Histogramm eingetragen, und können sich gegebenenfalls auch aufaddieren, deren Peaks werden allerdings niemals die Höhe des Maximums an der tatsächlichen Objektposition erreichen. In anderen Worten werden an der tatsächlichen Objektposition im Histogramm immer mindestens ein Event mehr registriert werden als an anderen möglichen Objektpositionen, die nicht der tatsächlichen Objektposition entsprechen.

Insgesamt kann somit auch bei dem erfindungsgemäßen Verfahren nicht ausgeschlossen werden, dass durch Aliasing-Effekte auch Events an "falschen" möglichen Objektpositionen erzeugt werden. Allerdings wird mittels der Erfindung verhindert, dass sich an einer falschen Objektposition gleich viele Events aufaddieren, wie an der tatsächlichen Objektposition, sodass eine eindeutige Rekonstruktion der tatsächlichen Objektposition stets möglich ist. Dadurch dass ferner Messpulse mit deutlich geringem Abstand zueinander ausgesandt werden können, können (legt man eine bestimmte Zeit fest) in dieser Zeit deutlich mehr Messungen als im Stand der Technik durchgeführt werden, was die Qualität des Verfahrens erhöht. Ferner kann (legt man eine bestimmte Qualität fest) das Verfahren in einer wesentlich reduzierten Zeit abgeschlossen werden.

Wie oben beschrieben kann einer Untergruppe mit einem konstanten Pulsabstand eine Teildistanz zugeordnet werden, die vorzugsweise kleiner als die doppelte Länge des Messbereichs ist. Die Relation zwischen dem konstanten Pulsabstand und der Teildistanz ist hierbei, dass die Teildistanz der Hälfte des konstanten Pulsabstandes entspricht. Mathematisch gesehen entspricht eine Messung mit einer Untergruppe mit einer Teildistanz einer Entfernungsmessung modulo M, wobei M für die Länge des Messbereichs steht. Dies bedeutet, dass die Entfernung bis zu einem Objekt, an dem eine Reflektion stattgefunden hat, nicht absolut bestimmt wird, sondern nur als Restklassengruppe modulo M zuzüglich gebrochenem Anteil.

Dabei definiert sich eine Restklassengruppe $\mathbb{Z}_n$ wie folgt: Ist $n \geq 1$ eine natürliche Zahl, dann werden ganze Zahlen mit gleichem Rest bei Division durch n zu sogenannten Restklassengruppe modulo n zusammengefasst. Zwei ganze Zahlen sind also in derselben Restklassengruppe, wenn ihre Differenz durch n teilbar ist. Die Restklassengruppe modulo 2 ergibt sich durch Division ganzer Zahlen durch 2 mit Rest, wobei der Rest entweder 0 oder 1 ist. Somit ist $\mathbb{Z}_2$ gleich {0, 1}. Die Restklassengruppen sind vor allem zyklische Gruppen. Bei der Zuordnung handelt es sich insbesondere um eine kanonische Zuordnung.

Als Beispiel sei M gleich 24 m und die erste Teildistanz sei 6 m und die zweite Teildistanz sei 8 m. Dies entspräche einem ersten konstanten Pulsabstand von 12 m und einem zweiten konstanten Pulsabstand von 16 m. Das kleinste gemeinsame Vielfache der entsprechenden Teildistanzen ist 24. Das kleinste gemeinsame Vielfache der konstanten Pulsabstände ist 48, was der doppelten Länge des Messbereichs entspricht.

Die Voraussetzungen für eine eindeutige Rekonstruktion der tatsächlichen Objektdistanz sind somit erfüllt. Die Elemente der Restklassengruppen ergeben sich wie folgt:

| Element der Gruppe $\mathbb{Z}_{24}$ | Element-Paar aus $\mathbb{Z}_6$ und $\mathbb{Z}_8$ |
|---|---|
| [0] | ([0], [0]) |
| [1] | ([1], [1]) |
| [2] | ([2], [2]) |
| [3] | ([3], [3]) |
| [4] | ([4], [4]) |
| [5] | ([5], [5]) |
| [6] | ([0], [6]) |
| [7] | ([1], [7]) |
| [8] | ([2], [0]) |
| [9] | ([3], [1]) |
| [10] | ([4], [2]) |
| [11] | ([5], [3]) |
| [12] | ([0], [4]) |
| [13] | ([1], [5]) |
| [14] | ([2], [6]) |
| [15] | ([3], [7]) |
| [16] | ([4], [0]) |
| [17] | ([5], [1]) |

(fortgesetzt)

| Element der Gruppe $\mathbb{Z}_{24}$ | Element-Paar aus $\mathbb{Z}_6$ und $\mathbb{Z}_8$ |
|---|---|
| [18] | ([0], [2]) |
| [19] | ([1], [3]) |
| [20] | ([2], [4]) |
| [21] | ([3], [5]) |
| [22] | ([4], [6]) |
| [23] | ([5], [7]) |

Ein Objekt befindet sich nun beispielsweise in einer Entfernung von 17,42 m. Die Messungen hinsichtlich der ersten und der zweiten Untergruppe ergeben die folgenden möglichen Objektpositionen:

Erste Untergruppe: 5,42 m; 11,42 m; **17,42 m;** 23,42 m
Zweite Untergruppe: 1,42 m; 9,42 m; **17,42 m**

Die einzige Entfernung, die hinsichtlich beider Untergruppen plausibel ist, ist die korrekte Distanz von 17,42 m, da sie als mögliche Objektposition in Bezug auf beide Untergruppen auftritt.

Aus dem Beispiel ist auch ersichtlich, dass es nicht schädlich ist, wenn sich eine tatsächliche Objektposition in einer Entfernung befindet, die keiner natürlichen Zahl entspricht, sondern einer rationalen, das heißt einer Zahl, die einen ganzzahligen Anteil und einen nicht ganzzahligen Anteil umfasst. Auch die falschen Ghost-Objekte ergeben sich an Positionen, die den gleichen nicht ganzzahligen Anteil aufweisen. Es kann somit der nicht ganzteilige Anteil ignoriert werden, um zunächst den richtigen ganzzahligen Anteil zu bestimmen, wobei anschließend um die tatsächliche Objektposition zu ermitteln, der zunächst ignorierte nicht ganzzahlige Anteil wieder addiert wird.

Vorzugsweise umfasst das Verfahren das Extrahieren der tatsächlichen Objektposition aus dem Histogramm. Dieser Schritt umfasst insbesondere das Bestimmen des Maximums des Histogramms. Das Histogramm kann ferner weitere nicht derart hoch ausgeprägte Nebenmaxima umfassen, wobei der Schritt des Extrahierens der tatsächlichen Objektposition das Unterdrücken der Nebenmaxima beispielsweise als Rauschen umfassen kann.

Bevorzugterweise entspricht das kleinste gemeinsame Vielfache für alle Paare der konstanten Pulsabstände der N Untergruppen mindestens der zweifachen Länge des Messbereichs. In anderen Worten können aus der Gruppe der konstanten Pulsabstände der N Untergruppen, die genau N Mitglieder umfasst, verschiedene Zweierpaare der konstanten Pulsabstände gebildet werden. Für jedes dieser Paare kann ein kleinstes gemeinsames Vielfaches bestimmt werden, wobei für alle diese kleinsten gemeinsamen Vielfachen gilt, dass diese mindestens der zweifachen Länge des Messbereichs entsprechen.

Dies hat den Vorteil, dass in dem erhaltenen Histogramm nur ein Hauptmaximum entsteht. Im Vergleich dazu haben jegliche Nebenmaxima nur die Höhe eines einzigen Events und können somit deutlich von dem Hauptmaximum unterschieden werden.

Ferner können die Nebenmaxima als Rauschen deklariert werden und somit auf einfache Weise das Hauptmaximum und somit die tatsächliche Objektposition aus dem Histogramm extrahiert werden.

Erfindungsgemäß sind die konstanten Pulsabstände der N Untergruppen teilerfremd. Ferner sind die den konstanten Pulsabständen zugeordnete Teildistanzen teilerfremd. Eine Teildistanz entspricht dabei der Hälfte des jeweiligen konstanten Pulsabstandes.

Bei dem Messbereich handelt es sich insbesondere um einen maximalen Messbereich oder um einen Unterbereich des maximalen Messbereichs, vor allem einen Fokusbereich.

Der maximale Messbereich definiert insbesondere den räumlichen Bereich, aus dem Reflexionen von einer Vorrichtung zur Durchführung des Verfahrens empfangen werden können. Mit dem Begriff maximaler Messbereich ist vor allem ein dreidimensionaler Bereich gemeint, aus dem Reflexionen der ausgesandten Messpulse empfangen werden können und vorzugsweise kann eine Vorrichtung, mit Hilfe derer das Verfahren zur optischen Distanzmessung ausgeführt wird, im maximalen Messbereich Messungen durchführen.

Mit dem Begriff Unterbereich des maximalen Messbereichs ist ein räumlich kleinerer Bereich als der maximale Messbereich gemeint. Beispielsweise kann hierunter ein Fokusbereich verstanden werden. Ein Fokusbereich definiert einen Bereich, aus dem mittels der Messung essenzielle Informationen zur fahrerlosen Navigation stammen sollen.

Insbesondere kann sich der Messbereich ausgehend von einer Vorrichtung zur Durchführung des Verfahrens um seine Länge erstrecken. Der Anfangsbereich des Messbereichs würde somit an der Vorrichtung liegen, während sein Endbereich um die Länge des Messbereichs von der Vorrichtung entfernt ist. In anderen Worten definiert die Länge somit den Distanzbereich des Messbereichs. Der Messbereich kann aber auch erst ab einer gewissen Distanz von der Vorrichtung beginnen und sich von hieraus (wegführend von der Vorrichtung) um seine Länge erstrecken. Bei der Vermessung eines solchen Messbereichs können Messpulse, die außerhalb des Messbereichs reflektiert wurden, bspw. durch zeitlich genau getimte Inaktivierung der Empfangseinheiten der Vorrichtung, bewusst ausgeblendet werden.

Die Länge des Messbereichs beträgt höchstens 1000 m, vorzugsweise höchstens 800 m, am meisten bevorzugt höchstens 600 m. Die Länge des Messbereichs ist ferner mindestens 1 m, ferner bevorzugt mindestens 5 m, am meisten bevorzugt mindestens 20 m.

Das Produkt für jedes Paar der konstanten Pulsabstände beträgt vorteilhafterweise mindestens die zweifache Länge des Messbereiches. Dabei wird das Produkt für jedes Paar der konstanten Pulsabstände (ohne entsprechende Maßeinheiten) mit der doppelten Länge des Messbereichs (auch ohne entsprechende Maßeinheiten) verglichen, wobei die konstanten Pulsabstände und die doppelte Messbereichslänge vor Weglassen der Maßeinheiten in derselben Maßeinheit vorliegen müssen. Bei dem Produkt für jedes Paar der konstanten Pulsabstände ist zu verstehen, dass jedes willkürlich gebildete Zweierpaar der Gruppe der konstanten Pulsabstände multipliziert wird, wobei das Ergebnis mindestens der zweifachen Länge des Messbereichs entspricht. Insbesondere ist das Produkt aller konstanten Pulsabstände mindestens so groß wie die zweifache Länge des Messbereichs.

Insbesondere weisen die Messpulse jeweils eine Pulsbreite auf, wobei die konstanten Pulsabstände derart gewählt sind, dass jeder konstante Pulsabstand einem Vielfachen der Pulsbreite entspricht. Dadurch wird sichergestellt, dass es zu keiner partiellen Überlappung von Messpulsen kommen kann, die eine eindeutige Rekonstruktion der tatsächlichen Objektposition erschweren würde. Ferner ist durch die Konstruktion sichergestellt, dass alle Messungen bezüglich der konstanten Pulsabstände bzw. der zugeordneten Teildistanzen der Messbereichslänge auch wirklich durchgeführt werden können.

Insbesondere wird das Vielfache minimal gewählt, vorzugsweise unter Berücksichtigung technischer Kenngrößen einer Vorrichtung zur Durchführung des Verfahrens. Eine Sendeeinheit, vor allem ein Laser, ist charakterisiert durch eine minimale Pausendauer $t_B$, die zwischen zwei aufeinanderfolgenden Messpulsen eingehalten werden muss, sowie der Pulsbreite $t_P$, hier auch Elementarintervall genannt, also die Zeit, während der die Vorrichtung den Messpuls aussendet. Die minimale Pausendauer ist einerseits durch die technische Konstruktion der Vorrichtung gegeben, andererseits müssen für einen zuverlässigen Dauerbetrieb meist größere Pausen gewählt werden, etwa um Überhitzung zu vermeiden. Um etwas Sicherheitspuffer zu haben, wird vorzugsweise $t_B = 2t_P$ gewählt.

Für die konstanten Pulsabstände gilt vorzugsweise, dass diese einem Vielfachen der Pulsbreite entsprechen, wobei n größer oder gleich 2 ist, d.h. $nt_p$, $n \geq 2$

Gegeben sei nun eine Maximaldistanz M. Wir bestimmen zunächst die Anzahl der Elementarintervalle, die im Stand der Technik zwischen zwei Messpulsen gewartet werden muss, um eine eindeutige Rekonstruktion von Objektpositionen bis zu M gewährleisten zu können. Sei dazu $t_M$ die Zeit, die das Licht zum Zurücklegen der Distanz M benötigt. Da der nächste Messpuls im herkömmlichen Ansatz erst dann ausgesendet werden kann, wenn das Echo eines gedachten Objekts, das genau an der Maximaldistanz M positioniert ist, zurückgekehrt ist, muss gelten:

$$kt_P \geq 2\, t_M$$

für $k \in \mathbb{N}$.

Unter Berücksichtigung der minimal einzuhaltenden Pause von $2t_P$, die zu einer Pulsaussendung pro Zeitintervall der Länge $3t_P$ führt, definieren wir das gesuchte minimale k mit obiger Eigenschaft zu

$$K := \min\left\{k : k \geq \frac{2\, t_M}{t_P}, k \geq 3\right\}.$$

Dieses minimale K beschreibt vorzugsweise den Faktor, nach der sich die Wahl der konstanten Pulsabstände richtet.

Bei einer Messung aus dem Stand der Technik würde zwischen zwei Messpulsen eine Dauer gewartet werden, um eine eindeutige Rekonstruktion der tatsächlichen Objektposition zu gewährleisten. Diese Dauer entspricht der Zeit $2t_M$, wobei $t_M$ die Zeit ist, die der Messpuls zum Zurücklegen der Distanz M benötigt. Die Zeit $2t_M$ ist also die Zeit, die das Echo eines gedachten Objekts, das genau an der am Ende der Länge M des Messbereichs positioniert ist, brauchen würde.

Beim erfindungsgemäßen Verfahren können den konstanten Pulsabstände Teildistanzen der Länge des Messbereichs zugeordnet werden. Diese Teildistanzen sind durch $d_1,...,d_N$. gegeben. Das Aussenden von verschiedenen Untergruppen mit konstanten Pulsabständen verändert die Anzahl an ausgesandten Messpulsen um einen Faktor F, der sich wie folgt ergibt:

$$F = \frac{NK}{\sum_{i=1}^{N} d_i}$$

Dies bedeutet, dass F mal so viele Messpulse, bspw. pro Zeitintervall $2t_M$, in dem normalerweise nur ein Messpuls versandt wäre, ausgesandt werden können.

Die konstanten Pulsabstände werden vorteilhafterweise nicht nur derart gewählt, dass die Anzahl der Messpulse pro Zeiteinheit maximiert werden, sondern gleichzeitig doppelte oder höhere Nebenmaxima im akkumulierten Histogramm vermieden werden. Es ist daher wünschenswert, dass die konstanten Pulsabstände so gewählt werden, dass nicht nur die tatsächliche Objektentfernung eindeutig rekonstruierbar ist, sondern auch keine weiteren mehrfachen Überlagerungen im Histogramm auftreten, wobei unter einer mehrfachen Überlagerung gemeint ist, dass sich an einer potenziellen falschen Objektposition mehrfache Events aufaddieren. Somit kann die tatsächliche Objektposition sehr viel leichter von den falschen Objektpositionen unterschieden werden.

Besonders bevorzugt werden die konstanten Pulsabstände daher so gewählt, dass obiges F maximal wird unter der Bedingung, dass keine mehrfachen Nebenmaxima auftreten können.

In einem weiteren Aspekt umfasst die Erfindung eine Vorrichtung, die dazu ausgebildet ist ein oben beschriebenes Verfahren durchzuführen. Bei der Vorrichtung handelt es sich um einen Lidar-Sensor, der eine Sendeeinheit, vor allem eine Sendematrix, zum Aussenden von Messpulsen und eine Empfangseinheit, vorzugsweise eine Empfangsmatrix, zum Empfangen reflektierter Messpulse umfasst. Unter dem Begriff Sendematrix ist insbesondere ein Array von Sendeelementen zu verstehen, während eine Empfangsmatrix ein Array von Empfangselementen sein kann. Eine Matrix kann insbesondere als dreidimensional, insbesondere plattenförmiger, Körper verstanden werden, auf dessen einer Oberfläche die entsprechenden Elemente, Sendeelemente oder Empfangselemente, angeordnet sind. Vorzugsweise handelt es sich bei den Sendeelementen jeweils um einen Laser, sodass die Sendematrix als Laserarray zu verstehen ist. Diese Empfangselemente werden vor allem von Dioden, insbesondere Avalanche-Fotodioden, am meistens bevorzugt Einzelphotonen-Avalanche-Dioden oder Pindioden gebildet.

Ferner bezieht sich die vorliegende Erfindung auf ein Computerprogrammprodukt, das ein computerlesbares Speichermedium umfasst, auf dem ein Programm gespeichert ist, das es einem Computer ermöglicht, nachdem es in den Speicher des Computers geladen worden ist, ein oben beschriebenes Verfahren im Zusammenspiel mit einer oben beschriebenen Vorrichtung durchzuführen. Weiterhin betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren im Zusammenspiel mit einer oben beschriebenen Vorrichtung durchzuführen.

## Kurze Beschreibung der Zeichnungen

Es zeigen schematisch:

Figur 1: einen Zeitablauf eines Verfahrens aus dem Stand der Technik;
Figur 2: ein Verfahrensschema eines erfindungsgemäßen Verfahrens;
Figur 3: schematische Darstellung eines erfindungsgemäßen Verfahrens hinsichtlich der Aussendung einer ersten Untergruppe und einer zweiten Untergruppe von Messpulsen;
Figur 4: Histogramme zum Extrahieren der tatsächlichen Objektposition; und
Figur 5: eine perspektivische Ansicht zweier Messbereiche.

## Bevorzugte Ausführungsformen der Erfindung

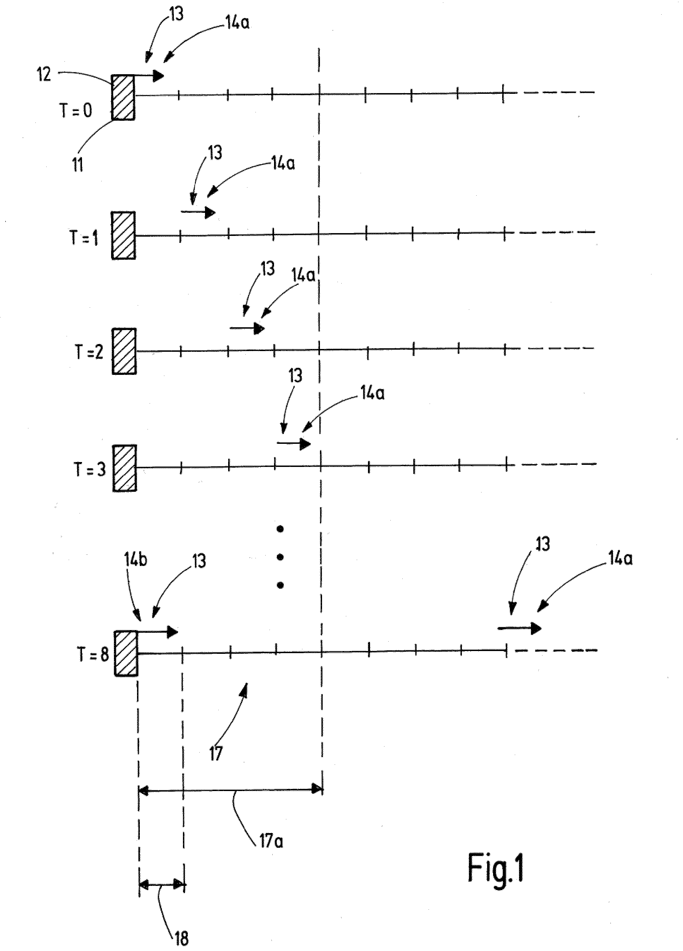

Figur 1 zeigt einen zeitlichen Ablauf eines Verfahrens zur Distanzmessung aus dem Stand der Technik. Im Detail sind insgesamt fünf verschiedene Zeitpunkte des Verfahrens dargestellt. Die verschiedenen Zeitpunkte werden auf der linken Seite mit T = 0, T = 1, T = 2, T = 3 und T = 8 gekennzeichnet. Für jeden Zeitpunkt ist eine Vorrichtung zu sehen, die dazu ausgebildet ist, Messpulse zu versenden mittels einer Aussendeeinheit (12) und Messpulse zu empfangen mittels einer Empfangseinheit (11). Ausgehend von dieser Vorrichtung auf der linken Seite beginnt ein Messbereich (17) mit einer Länge (17a).

Dabei legt ein ausgesandter Messpuls genau eine Distanzeinheit (18) in einer Zeiteinheit zurück. Die Länge (17a) des Messbereichs (17) beträgt genau vier Distanzeinheiten (18). Distanzen zwischen zwei Messpulsen oder einem Messpuls und einem Objekt oder der Vorrichtung sind in Figur 1 somit in Bezug auf Distanzeinheiten dargestellt, wobei sich aus diesen natürlich einfach auf deren zeitlichen Abstand schließen lässt. Sind zwei Messpulse bspw. zwei Distanzeinheiten voneinander entfernt in Figur 1 dargestellt, so haben sie einen zeitlichen Abstand von zwei Zeiteinheiten.

Die Vorrichtung sendet zum Zeitpunkt T = 0 einen ersten Messpuls (14a) aus. So befindet sich der erste ausgesandte Messpuls (14a) im Zeitpunkt T = 1 eine Distanzeinheit (18) von der Vorrichtung entfernt, während er sich zum Zeitpunkt T = 2 um zwei Distanzeinheiten (18) und beim Zeitpunkt T = 3 um drei Distanzeinheiten (18) von der Vorrichtung entfernt hat.

Nach vier Zeiteinheiten, also bei T = 4 (aus Platzgründen nicht explizit dargestellt), hat der erste ausgesandte Messpuls (14a) das Ende des Messbereiches (17) erreicht. Beim Zeitpunkt T = 8, das heißt nach acht Einheiten nach dem Aussenden, hat sich der erste ausgesandte Messpuls (14a) um acht Distanzeinheiten (18) von der Vorrichtung wegbewegt. Dies entspricht der doppelten Länge (17a) des Messbereiches (17).

Im Stand der Technik ist es üblich die Zeit abzuwarten, die ein Messpuls (13) bräuchte sich zum Ende des Messbereichs (17) zu bewegen und von dort aus wieder zurück zur Vorrichtung. Dies entspricht der Zeit, die ein Messpuls (13) bräuchte, um zur Vorrichtung als reflektierter Messpuls zurückzukehren, wenn er genau am Ende des Messbereiches (17) reflektiert werden würde. In dem Fall, dass sich der Messbereich (17) direkt an die Vorrichtung anschließt, ist dies die Zeit, die der Messpuls (13) für die doppelte Länge (17a) des Messbereichs (17) bräuchte.

In dem Beispiel der Figur 1 entspricht die Zeit, die man abwarten würde, 8 Zeiteinheiten. Daher wird erst beim Zeitpunkt T = 8 ein zweiter Messpuls, hier zweiter ausgesandter Messpuls (14b) genannt, ausgesandt. Auf diese Weise soll eine Unsicherheit vermieden werden, welchem ausgesandten Messpuls die Reflektion des ersten ausgesandten Messpulses (14a) zugeordnet werden soll. Im Stand der Technik soll durch diese Art und Weise sichergestellt werden, dass stets eine eineindeutige Zuordnung zwischen einem reflektierten Messpuls und einem ausgesandten Messpuls stattfinden kann und somit eindeutig bestimmt werden kann, wo sich ein Objekt befindet, an dem der Messpuls (13) reflektiert wurde.

Allerdings können im Stand der Technik trotzdem Probleme auftreten. Bei dem Verfahren aus dem Stand der Technik kann sich bspw. das Problem ergeben, dass bei Reflektion eines Messpulses (13) außerhalb der Länge (17a) des Messbereiches (17), dieser aus Versehen dennoch fälschlicherweise zugeordnet werden könnte. Beispielsweise könnte dieser reflektierte Messpuls dem darauf folgenden ausgesandten Messpuls zugeordnet werden.

Am Beispiel der Figur 1 erläutert, hätte der Messpuls (14a) beispielsweise nach fünf Distanzeinheiten (18), d.h. außerhalb des Messbereichs (17), an einem Objekt reflektiert werden können. Das Verfahren aus dem Stand der Technik würde diese Reflektion fälschlicherweise dem zweiten ausgesandten Messpuls (14b) zuordnen und käme zu der Schlussfolgerung, dass sich das Objekt eine Distanzeinheit (18) von der Vorrichtung entfernt befände, was nicht korrekt ist. Das heißt, sogar bei den langen Wartezeiten zwischen dem Aussenden zweier Messpulse aus dem Stand der Technik können Komplikationen wegen einer falschen Zuordnung von reflektierten und ausgesandten Messpulsen resultieren.

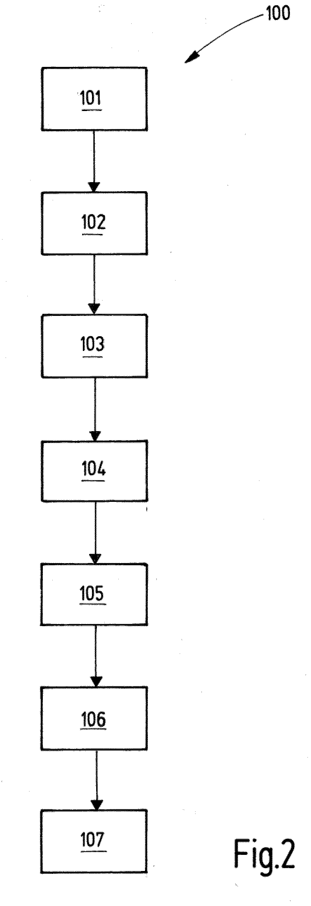

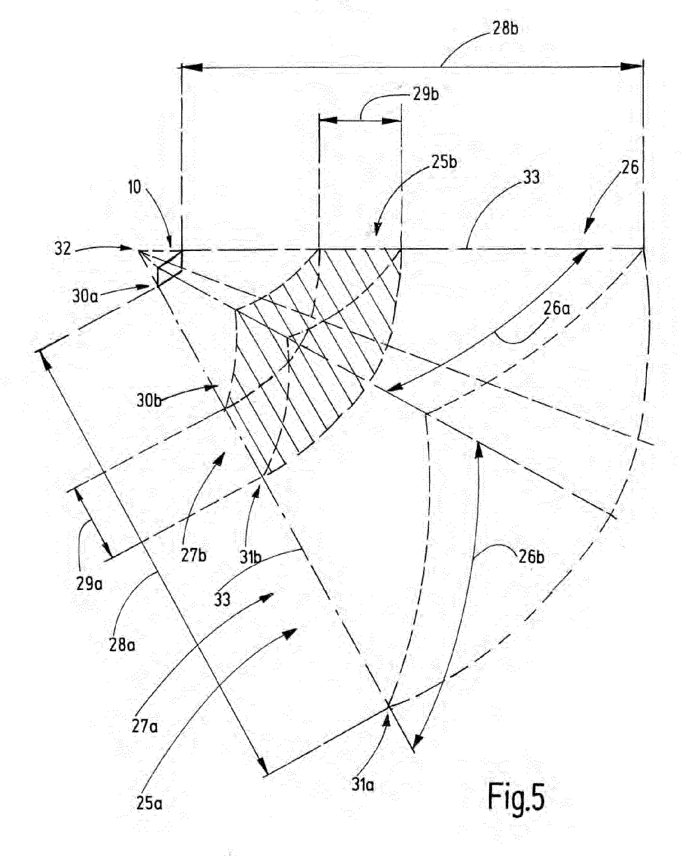

In Figur 2 ist ein Verfahrensschema eines erfindungsgemäßen Verfahrens (100) gezeigt. Das Verfahren (100) umfasst das Aussenden (101) einer Vielzahl von Messpulsen (13). Im Detail werden N Untergruppen von Messpulsen (13) ausgesandt (102). Ausgesandte Messpulse werden an mindestens einem Objekt (20) reflektiert (103), wobei die reflektierten Messpulse empfangen werden (104). Nicht jeder ausgesandte Messpuls muss reflektiert werden, sondern dies trifft nur auf Messpulse zu, die auf ein Objekt (20) treffen. Vorzugsweise wird das erfindungsgemäße Verfahren (100) mittels einer erfindungsgemäßen Vorrichtung (10) durchgeführt. Diese Vorrichtung (10) umfasst insbesondere eine Empfangseinheit (11) und eine Sendeeinheit (12) (Figur 5).

Ferner umfasst das Verfahren (100) das Ermitteln (105) möglicher Objektpositionen (23) für jeden reflektierten Messpuls. Erfindungsgemäß werden alle möglichen Objektpositionen (23) in einem Histogramm (21) akkumuliert (106), wobei die tatsächliche Objektposition (24) eines Objektes (20), an dem Messpulse (13) reflektiert wurden, aus diesem Histogramm (21) extrahiert wird (107).

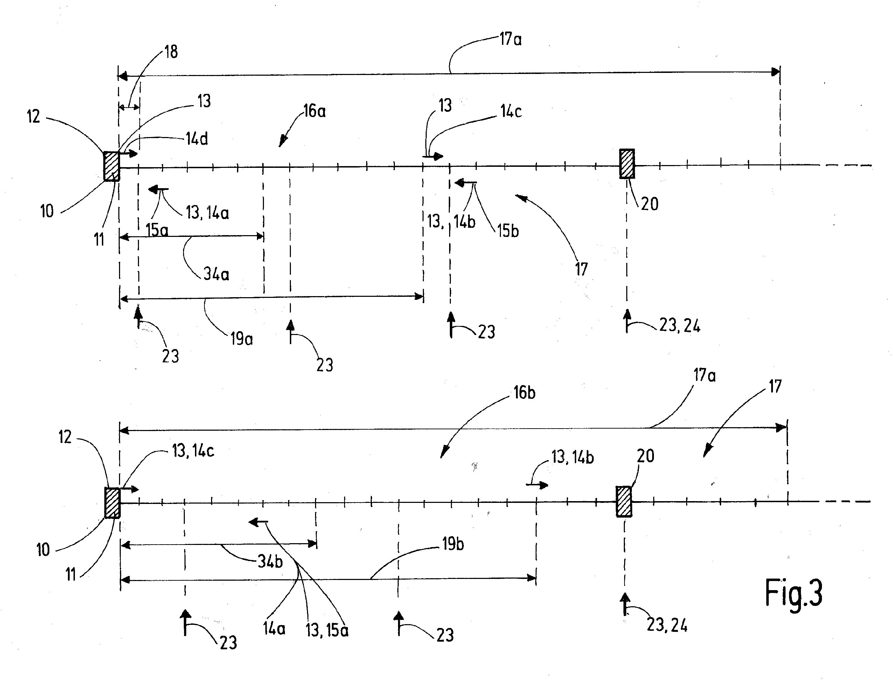

In Figur 3 ist eine schematische Darstellung eines erfindungsgemäßen Verfahrens (100) hinsichtlich der Aussendung einer ersten Untergruppe (16a) und einer zweiten Untergruppe (16b) von Messpulsen (13) gezeigt. Dabei ist die Darstellung analog der Figur 1. Dies heißt, dass bspw. erneut eine Distanzeinheit der Distanz entspricht, die ein Messpuls nach einer Zeiteinheit zurückgelegt hat.

In der oberen Bildhälfte der Figur 3 wird, vorzugsweise mittels einer erfindungsgemäßen Vorrichtung (10), umfassend eine Empfangseinheit (11) und eine Sendeeinheit (12), eine erste Untergruppe (16a) von Messpulsen (13) ausgesandt. Von dieser ersten Untergruppe (16a) sind in der oberen Bildhälfte der Figur 3 vier Messpulse (13) zu sehen. Die erste Untergruppe (16a) kann jedoch mehr Messpulse umfassen, die vor und/oder nach dem Aussenden der in der oberen Bildhälfte dargestellten Messpulse ausgesandt wurden bzw. noch ausgesandt werden.

Die Messpulse (13) der ersten Untergruppe (16a) haben einen ersten konstanten Pulsabstand (19a), der zwölf Distanzeinheiten entspricht. Dies ist daran zu erkennen, dass benachbarte Messpulse zwölf Distanzeinheiten (18) voneinander entfernt dargestellt sind. Im Detail ist beim Aussenden des vierten ausgesandten Messpulses (14d) der dritte ausgesandte Messpuls (14c) bereits zwölf Distanzeinheiten (18) entfernt.

Ferner ist der erste ausgesandte Messpuls (14a), der bereits an einem Objekt (20) reflektiert wurde und somit einen ersten reflektierten Messpuls (15a) dargestellt, 36 Distanzeinheiten vom vierten ausgesandten Messpuls (14d) beabstandet. Der zweite ausgesandte Messpuls (14b), der ebenfalls bereits am Objekt (20) reflektiert wurde und den zweiten reflektierten Messpuls (15b) darstellt, ist 24 Distanzeinheiten vom vierten ausgesandten Messpuls (14d) entfernt.

Die entsprechende Teildistanz, hier die erste Teildistanz (34a), die dem ersten konstanten Pulsabstand (19a) zugeordnet werden kann, entspricht 6 Distanzeinheiten.

Das Objekt (20) befindet sich innerhalb eines Messbereiches (17), das heißt innerhalb der Länge (17a) des Messbereiches. Die Länge (17a) des Messbereiches (17) beträgt hier 24 Distanzeinheiten (18). Das Objekt (20) befindet sich innerhalb dieser Länge (17a) und zwar 19 Distanzeinheiten (18) von der Vorrichtung (10) entfernt.

Bei Auswertung der mittels der ersten Untergruppe (16a) erhaltenen Informationen ergeben sich vier mögliche Objektpositionen (23), und zwar bei jeweils einem Abstand von einer, sieben, 13 und 19 Distanzeinheiten (18) zur Vorrichtung (10) mögliche Objektposition (23) bei einem Abstand von einer Distanzeinheit (18) zur Vorrichtung (10) ergibt sich bspw., wenn der erste reflektierte Messpuls (15a) dem vierten ausgesandten Messpuls (14d) zugeordnet wird. Die möglichen Objektpositionen (23) befinden sich in einem Abstand zueinander, der dem halben ersten konstanten Pulsabstand (19a), d.h. der ersten Teildistanz (34a), entspricht.

Allein aus der Aussendung der ersten Untergruppe (16a) kann die tatsächliche Objektposition (24) des Objektes (20) somit nicht eindeutig ermittelt werden. Es entstehen sogenannte Ghost-Objekte des Objektes an allen möglichen Objektpositionen (23), die nicht der tatsächlichen Objektposition (24) entsprechen. Nur anhand der ersten Untergruppe (16a) kann zwischen diesen möglichen Objektpositionen (23) und der tatsächlichen Objektposition (24) nicht unterschieden werden.

In der unteren Bildhälfte der Figur 3 ist das Aussenden einer zweiten Untergruppe (16b) von Messpulsen (13) gezeigt. Es sind dabei drei Messpulse (13) der zweiten Untergruppe (16b) dargestellt, ein erster ausgesandter Messpuls (14a), ein zweiter ausgesandter Messpuls (14b) sowie ein dritter ausgesandter Messpuls (14c), der bereits am Objekt reflektiert wurde und somit einen ersten reflektierten Messpuls (15a) darstellt. Die zweite Untergruppe (16b) kann analog zur ersten Untergruppe (16a) mehr Messpulse umfassen, die vor und/oder nach dem Aussenden der in der unteren Bildhälfte dargestellten Messpulse ausgesandt wurden bzw. noch ausgesandt werden.

Zu dem in der unteren Bildhälfte der Figur 3 dargestellten Zeitpunkt ist der erste ausgesandte Messpuls (14a), der bereits an einem Objekt (20) reflektiert wurde, sechs Distanzeinheiten (18) von der Vorrichtung (10) entfernt, während der zweite ausgesandte Messpuls (14b) drei Distanzeinheiten (18) vom Objekt entfernt ist und der dritte ausgesandte Messpuls (14c) gerade ausgesandt wird. Das Objekt (20) befindet sich analog zur oberen Bildhälfte der Figur 3 19 Distanzeinheiten (18) zur Vorrichtung (10) zur Durchführung des Verfahrens (100) entfernt. Der zweite konstante Pulsabstand (19b) der zweiten Untergruppe (16b) beträgt 16 Distanzeinheiten, in der unteren Bildhälfte der Figur 3 ersichtlich als 16 Distanzeinheiten (18) zwischen zwei benachbarten Messpulsen. Die dem zweiten konstanten Pulsabstand (19b) zugeordnete zweite Teildistanz (34b) beträgt acht Distanzeinheiten.

Aus den mittels der zweiten Untergruppe (16b) erhaltenen Informationen kann abgeleitet werden, dass sich das Objekt (20) an drei verschiedenen möglichen Objektpositionen (23) befinden kann, und zwar bei jeweils einem Abstand von 3, 11 und 19 Distanzen zur Vorrichtung (10). Beispielsweise wird in dem in der unteren Bildhälfte der Figur 3 dargestellten Zeitpunkt der erste ausgesandte Messpuls (14a) sechs Zeiteinheiten nach dem Aussenden des dritten ausgesandten Messpulses (14c) empfangen. Dadurch schließt das Verfahren, dass sich das Objekt (20) möglicherweise drei Distanzeinheiten (18) vor der Vorrichtung (10) befinden könnte. Die möglichen Objektpositionen (23) sind in einem Abstand zueinander angeordnet, der dem halben zweiten konstanten Pulsabstand (19b), d.h. der zweiten Teildistanz (34b), entspricht.

Das kleinste gemeinsame Vielfache der konstanten Pulsabstände, und zwar der Zahlen 12 und 16 beträgt hier 48, d.h. 48 Distanzeinheiten, was der doppelten Länge (17a) des Messfensters entspricht, die 24 Distanzeinheiten beträgt.

Aus Figur 3 wird ersichtlich, dass beim Aussenden einer einzigen Untergruppe von Messpulsen, die einen konstanten Pulsabstand aufweisen, der kleiner ist als die doppelte Länge (17a) des Messbereiches (17), auch Ghost-Objekte an möglichen Objektpositionen (23) auftreten. Wird demnach nur eine einzige Untergruppe ausgesandt, kann weiterhin nicht eindeutig die tatsächliche Objektposition (24) bestimmt werden. Allerdings wird aus Figur 3 auch klar, dass durch die Kombination des Aussendens der dargestellten Untergruppen die tatsächliche Objektposition (24) eindeutig bestimmt werden kann. Und zwar ist ersichtlich, dass für jede Untergruppe mögliche Objektpositionen entstehen, wobei nur an der tatsächlichen Objektposition (24) sowohl mittels der ersten Untergruppe (16a) als auch mittels der zweiten Untergruppe (16b) eine einzige mögliche Objektposition (23) festgestellt wurde. Die anderen möglichen Objektpositionen (23) der ersten Untergruppe (16a) werden durch die zweite Untergruppe (16b) nicht bestätigt. Das Gleiche gilt für die anderen möglichen Objektpositionen der zweiten Untergruppe (16b), die ebenfalls nicht bestätigt werden. Es kann somit geschlussfolgert werden, dass sich das Objekt (20) nur an der tatsächlichen Objektposition (24) befinden kann.

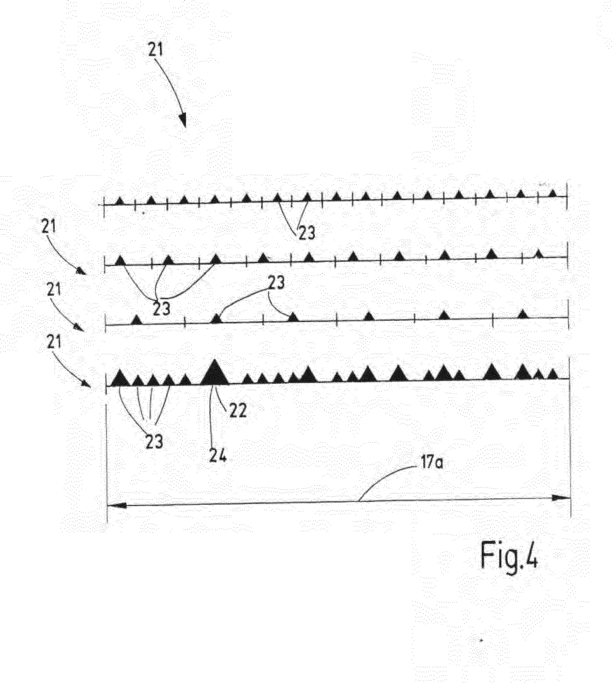

In Figur 4 sind verschiedene Histogramme (21) zum Extrahieren (107) der tatsächlichen Objektposition (24) gezeigt. Dabei erstrecken sich die Histogramme (21) entlang der Länge (17a) eines Messbereiches (17).

In der ersten Zeile der Figur 4 werden mögliche Objektpositionen (23) beim Aussenden einer ersten Untergruppe (16a) von Messpulsen (13) gezeigt, während die zweite Zeile der Figur 4 mögliche Objektpositionen (23) zeigt, die erhalten werden, wenn eine zweite Untergruppe (16b) von Messpulsen (13) ausgesandt wird. In der dritten Zeile von oben sind mögliche Objektpositionen (23) beim Aussenden einer dritten Untergruppe von Messpulsen (13) dargestellt.

An jeder möglichen Objektposition (23) ist ein "Event" eingetragen, diese stellen sich in den Histogrammen als Peaks dar. Es kann somit für jede Untergruppe von Messpulsen ein eigenes Histogramm erstellt werden, wobei aus diesen einzelnen Histogrammen die tatsächliche Objektposition (24) nicht ermittelt werden kann.

In der letzten Zeile der Figur 4 ist ein Histogramm (21) zu sehen, in dem die zuvor beschriebenen einzelnen Histogramme, die den Untergruppen zugeordnet werden können, akkumuliert, das heißt aufaddiert, wurden. Während in den einzelnen Histogrammen für die verschiedenen Untergruppen die Peaks nur eine einfache Höhe aufweisen, werden Peaks, die an derselben Stelle in mehreren Histogrammen für die Untergruppen auftreten, in der untersten Zeile der Figur 4 durch die Akkumulation größer. Beispielsweise weist der erste Peak in der untersten Zeile der Figur 4 eine zweifache Höhe auf, da sowohl im Histogramm für die erste Untergruppe als auch im Histogramm für die zweite Untergruppe an dieser bestimmten Position eine mögliche Objektposition festgestellt wurde. Er wird ersichtlich, dass lediglich an der tatsächlichen Objektposition (24) eine dreifache Überlagerung, das heißt ein Peak mit einer dreifachen Höhe, resultiert.

Alle weiteren Peaks weisen eine einfache Höhe auf, und stellen somit einfache Ghost-Objekte dar, oder eine zweifache Höhe, und stellen somit zweifache Ghost-Objekte dar. Sie können jedoch von der tatsächlichen Objektposition (24) unterschieden werden, da an dieser das Maximum des Histogramms (21) auftritt. Somit kann auf einfache Art und Weise die tatsächliche Objektposition (24) aus dem Histogramm (21) extrahiert werden.

Figur 5 zeigt eine perspektivische Ansicht zweier Messbereiche, und zwar eines ersten Messbereiches (25a) und eines zweiten Messbereiches (25b).

Ferner zeigt Figur 5 eine Vorrichtung (10) zur Ausführung eines erfindungsgemäßen Verfahrens (100). Der erste Messbereich (25a) erstreckt sich ausgehend von der Vorrichtung (10) in Strahlenausbreitungsrichtung (33). Die Strahlenausbreitungsrichtung (33) ergibt sich für einen Punkt in einem Messbereich aufgrund der flächigen Ausbildung einer Sendeeinheit der Vorrichtung (10) vorzugsweise, indem man den Punkt mit einem gedachten Ursprung (32), der hinter der Vorrichtung (10) liegt, verbindet. Der Ursprung (32) dient der Veranschaulichung einer Position einer einzigen Strahlungsquelle im Gegensatz zu einer Vielzahl von Sendeelementen wie sie eine Sendeeinheit aufweist.

Der erste Messbereich (25a) erstreckt sich von einem ersten Anfangsbereich (30a), der sich direkt an der Vorrichtung (10) befindet, bis zu einem ersten Endbereich (31a). Somit ergibt sich mindestens eine erste Länge (28a) des ersten Messbereiches (25a).

Ferner ergibt sich eine zweite Länge (28b). Beide Längen (28a, 28b) können einander bei symmetrischer Ausbildung des ersten Messbereiches (25a) entsprechen.

Der erste Messbereich (25a) wird somit auf der einen Seite durch seine Längen (25a, 25b) in Strahlenausbreitungsrichtung definiert. Diese Längen definieren einen ersten Distanzbereich (27a), den der erste Messbereich (25a) abdeckt. Genauer werden Distanzen zur Vorrichtung vom ersten Anfangsbereich (30a) bis zum ersten Endbereich (31a) abgedeckt.

Ferner wird der erste Messbereich (25a) durch ein Sichtfeld (26) definiert. Das Sichtfeld (26) wird durch zwei Winkelsektoren (26a, 26b) in zwei Ebenen aufgespannt. Somit weist der erste Messbereich (25a) insgesamt eine pyramidenförmige Gestalt auf, wobei die Pyramide aufgrund der flächigen Ausbildung einer Sendeeinheit der Vorrichtung (10) keine Spitze aufweist, sondern mit der Fläche der Sendeeinheit abschließt. Streng genommen handelt es sich somit um einen Pyramidenstumpf, wobei dessen Grundfläche im ersten Endbereich (31a) gewölbt ausgestaltet ist.

Ferner ist in Figur 5 ein im Vergleich zum ersten Messbereich (25a) deutlich kleinerer zweiter Messbereich (25b) dargestellt, der durch dasselbe Sichtfeld (26) definiert ist. Allerdings ist der zweite Distanzbereich (27b) des zweiten Messbereiches (25b) stark eingeschränkt. Der zweite Messbereich (25b) weist einen zweiten Anfangsbereich (30b) und einen zweiten Endbereich (31b) auf.

Der zweite Anfangsbereich (30a) ist nicht direkt an der Vorrichtung (10) angeordnet, sondern in einer Distanz zu dieser. Der zweite Endbereich (31b) ist nicht am ersten Endbereich (31a) angeordnet, sondern im Vergleich zu diesem deutlich näher an der Vorrichtung (10). Der zweite Messbereich (25b) stellt einen Unterbereich des ersten Messbereiches (25a) dar, indem ein deutlich geringerer Distanzbereich, und zwar der zweite Distanzbereich (27b), ausgewählt ist.

Ausgehend vom zweiten Anfangsbereich (30b) bis zum zweiten Endbereich (31b) weist der zweite Messbereich (25b) eine erste Länge (29a) sowie eine zweite Länge (29b) auf. Der zweite Messbereich (25b) ist somit als Pyramidenstumpf mit einer gewölbten Grundfläche und einer gewölbten Deckfläche ausgebildet.

Bezugszeichenliste

100    erfindungsgemäßes Verfahren
101    Aussenden einer Vielzahl von Messpulsen
102    Aussenden von N Untergruppen von Messpulsen
103    Reflektion von ausgesandten Messpulsen an mindestens einem Objekt

104 Empfangen von reflektierten Messpulsen
105 Ermitteln möglicher Objektpositionen für jeden reflektierten Messpuls
106 Akkumulation aller möglichen Objektpositionen in einem Histogramm
107 Extrahieren der tatsächlichen Objektposition aus dem Histogramm

10 Vorrichtung
11 Empfangseinheit
12 Sendeeinheit
13 Messpuls
14a erster ausgesandter Messpuls
14b zweiter ausgesandter Messpuls
14c dritter ausgesandter Messpuls
14d vierter ausgesandter Messpuls
15a erster reflektierter Messpuls
15b zweiter reflektierter Messpuls
16a erste Untergruppe
16b zweite Untergruppe
17 Messbereich
17a Länge des Messbereichs
18 Distanzeinheit
19a erster konstanter Pulsabstand
19b zweiter konstanter Pulsabstand

20 Objekt
21 Histogramm
22 Hauptmaximum
23 mögliche Objektposition
24 tatsächliche Objektposition
25a erster Messbereich
25b zweiter Messbereich
26 Sichtfeld
26a erster Winkelsektor
26b zweiter Winkelsektor
27a erster Distanzbereich
27b zweiter Distanzbereich
28a erste Länge des ersten Messbereichs
28b zweite Länge des ersten Messbereichs
29a erste Länge des zweiten Messbereichs
29b zweite Länge des zweiten Messbereichs

30a erster Anfangsbereich
30b zweiter Anfangsbereich
31a erster Endbereich
31b zweiter Endbereich
32 Ursprung
33 Strahlenausbreitungsrichtung
34a erste Teildistanz
34b zweite Teildistanz

**Patentansprüche**

1. Verfahren (100) zur optischen Distanzmessung,

   wobei das Verfahren (100) das Aussenden (101) einer Vielzahl von Messpulsen (13), die Reflektion (103) von ausgesandten Messpulsen an mindestens einem Objekt (20) in einem Messbereich (17) mit einer Länge (17a) und das Empfangen (104) von reflektierten Messpulsen (13) umfasst,
   wobei N Untergruppen von Messpulsen (13) ausgesandt werden (102),

wobei jede Untergruppe einen konstanten Pulsabstand aufweist,

wobei

sich der konstante Pulsabstand verschiedener Untergruppen unterscheidet, wobei das kleinste gemeinsame Vielfache der konstanten Pulsabstände der N Untergruppen mindestens der zweifachen Länge (17a) des Messbereichs (17) entspricht,

wobei

die konstanten Pulsabstände teilerfremd sind,

**dadurch gekennzeichnet, dass**

das Verfahren (100) das Ermitteln (105) möglicher Objektpositionen (23) für jeden reflektierten und empfangenen Messpuls (13) anhand der ermittelten Laufzeiten und eine Akkumulation (106) aller möglichen Objektpositionen (23) in einem Histogramm (21) umfasst.

2. Verfahren (100) nach Anspruch 1,
**dadurch gekennzeichnet, dass**
die konstanten Pulsabstände jeweils kleiner als die zweifache Länge (17a) des Messbereichs (17) sind.

3. Verfahren (100) nach Anspruch 1 oder 2,
**dadurch gekennzeichnet, dass**
das Verfahren (100) das Extrahieren (107) der tatsächlichen Objektposition (24) aus dem Histogramm (21) umfasst.

4. Verfahren (100) nach einem der vorherigen Ansprüche,
**dadurch gekennzeichnet, dass**
das kleinste gemeinsame Vielfache für alle Paare der konstanten Pulsabstände der N Untergruppen mindestens der zweifachen Länge (17a) des Messbereichs (17) entspricht.

5. Verfahren (100) nach einem der vorherigen Ansprüche,
**dadurch gekennzeichnet, dass**
es sich bei dem Messbereich (17) um einen maximalen Messbereich oder um einen Unterbereich des maximalen Messbereichs, vor allem einen Fokusbereich, handelt.

6. Verfahren (100) nach einem der vorherigen Ansprüche,
**dadurch gekennzeichnet, dass**
die Länge (17a) des Messbereichs (17) höchstens 1000 m, bevorzugterweise höchstens 800 m, am meisten bevorzugt höchstens 600 m beträgt.

7. Verfahren (100) nach einem der vorherigen Ansprüche,
**dadurch gekennzeichnet, dass**
die Länge (17a) des Messbereichs (17) mindestens 1 m, ferner bevorzugt mindestens 5 m, am meisten bevorzugt mindestens 20 m, beträgt.

8. Verfahren (100) nach einem der vorherigen Ansprüche,
**dadurch gekennzeichnet, dass**
das Produkt für jedes Paar der konstanten Pulsabstände mindestens der zweifachen Länge (17a) des Messbereichs (17) entspricht.

9. Verfahren (100) nach einem der vorherigen Ansprüche,
**dadurch gekennzeichnet, dass**
das Produkt aller konstanten Pulsabstände mindestens der zweifachen Länge (17a) des Messbereichs (17) entspricht.

10. Verfahren (100) nach einem der vorherigen Ansprüche,
**dadurch gekennzeichnet, dass**

die Messpulse (13) eine Pulsbreite aufweisen,

wobei die konstanten Pulsabstände derart gewählt sind, dass jeder konstante Pulsabstand einem Vielfachen der Pulsbreite entspricht.

11. Vorrichtung (10) zur optischen Distanzmessung,

wobei die Vorrichtung (10) als Lidar-Sensor ausgebildet ist und eine Sendeeinheit (12) zum Aussenden von Messpulsen und eine Empfangseinheit (11) zum Empfangen reflektierter Messpulse umfasst, wobei die Vorrichtung (10) dazu ausgebildet ist ein Verfahren (100) nach einem der Ansprüche 1 bis 10 durchzuführen.

12. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 10 im Zusammenspiel mit einer Vorrichtung (10) gemäß Anspruch 11 durchzuführen.

13. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 10 im Zusammenspiel mit einer Vorrichtung (10) gemäß Anspruch 11 durchzuführen.

**Claims**

1. Method (100) for optical distance measurement,

   wherein the method (100) comprises emitting (101) a plurality of measuring pulses (13), reflecting (103) emitted measuring pulses at at least one object (20) in a measuring range (17) with a length (17a), and receiving (104) reflected measuring pulses (13),
   wherein N subgroups of measuring pulses (13) are emitted (102),
   wherein each subgroup has a constant pulse spacing,
   wherein
   the constant pulse spacing of different subgroups differs,
   wherein the least common multiple of the constant pulse spacings of the N subgroups corresponds to at least twice the length (17a) of the measuring range (17),
   wherein
   the constant pulse spacings are prime to each other,
   **characterized in that**
   the method (100) comprises determining (105) possible object positions (23) for each reflected and received measuring pulse (13) on the basis of the determined transit times and accumulating (106) all possible object positions (23) in a histogram (21).

2. Method (100) according to claim 1,
   **characterized in that**
   the constant pulse spacings are each smaller than twice the length (17a) of the measuring range (17).

3. Method (100) according to claim 1 or 2,
   **characterized in that**
   the method (100) comprises extracting (107) the actual object position (24) from the histogram (21).

4. Method (100) according to one of the previous claims,
   **characterized in that**
   the least common multiple for all pairs of the constant pulse spacings of the N subgroups corresponds to at least twice the length (17a) of the measuring range (17).

5. Method (100) according to one of the previous claims,
   **characterized in that**
   the measuring range (17) is a maximum measuring range or a subrange of the maximum measuring range, in particular a focus range.

6. Method (100) according to one of the previous claims,
   **characterized in that**
   the length (17a) of the measuring range (17) is at most 1000 m, preferably at most 800 m, most preferably at most 600 m.

7. Method (100) according to one of the preceding claims,

**characterized in that**
the length (17a) of the measuring range (17) is at least 1 m, further preferably at least 5 m, most preferably at least 20 m.

8. Method (100) according to one of the preceding claims,
**characterized in that**
the product for each pair of constant pulse spacings corresponds to at least twice the length (17a) of the measuring range (17).

9. Method (100) according to one of the previous claims,
**characterized in that**
the product of all constant pulse spacings corresponds to at least twice the length (17a) of the measuring range (17).

10. Method (100) according to one of the previous claims,
**characterized in that**

the measuring pulses (13) have a pulse width,
wherein the constant pulse spacings are selected such that each constant pulse spacing corresponds to a multiple of the pulse width.

11. Device (10) for optical distance measurement,
wherein the device (10) is configured as a lidar sensor and comprises a transmitting unit (12) for transmitting measuring pulses and a receiving unit (11) for receiving reflected measuring pulses, wherein the device (10) is configured to perform a method (100) according to one of claims 1 to 10.

12. Computer program product comprising a computer-readable storage medium on which a program is stored that enables a computer, after having been loaded into the computer's memory, to perform a method (100) according to any one of claims 1 to 10 in cooperation with a device (10) according to claim 11.

13. Computer-readable storage medium on which a program is stored that enables a computer, after having been loaded into the memory of the computer, to perform a method according to any one of claims 1 to 10 in cooperation with a device (10) according to claim 11.

**Revendications**

1. Procédé (100) de mesure optique de distance, dans lequel le procédé (100) consiste à émettre (101) une pluralité d'impulsions de mesure (13), à réfléchir (103) des impulsions de mesure émises sur au moins un objet (20) dans une plage de mesure (17) avec une longueur (17a) et recevoir (104) des impulsions de mesure réfléchies (13), dans lequel N sous-groupes d'impulsions de mesure (13) sont émis (102), dans lequel chaque sousgroupe présente un espacement d'impulsion constant, dans lequel l'espacement d'impulsion constant différencie des sous-groupes différents, dans lequel le plus petit multiple commun des intervalles d'impulsions constants des N sous-groupes correspond à au moins le double de la longueur (17a) de la plage de mesure (17),

dans lequel les espacements d'impulsions constantes sont non divisibles,
**caractérisé en ce que** le procédé (100) implique la détermination (105) de positions possibles d'objets (23) pour chaque impulsion de mesure (13) réfléchie et reçue sur la base des temps de transit déterminés et d'une accumulation (106) de toutes les positions possibles d'objet (23) dans un histogramme (21).

2. Procédé (100) selon la revendication 1, **caractérisé en ce que** les intervalles d'impulsions constants sont chacun inférieurs au double de la longueur (17a) de la plage de mesure (17).

3. Procédé (100) selon la revendication 1 ou 2, **caractérisé en ce que** le procédé (100) comprend l'extraction (107) de la position réelle de l'objet (24) à partir de l'histogramme (21).

4. Procédé (100) selon une des revendications précédentes, **caractérisé en ce que** le plus petit multiple commun pour tous les couples des espacements d'impulsions constants des N sous-groupes correspond au moins au double de la longueur (17a) de la plage de mesure (17).

**5.** Procédé (100) selon une des revendications précédentes, **caractérisé en ce que** la plage de mesure (17) est une plage de mesure maximale ou une sous-plage de la plage de mesure maximale, notamment une plage de focalisation.

**6.** Procédé (100) selon une des revendications précédentes, **caractérisé en ce que** la longueur (17a) de la plage de mesure (17) est d'au plus 1000 m, de préférence d'au plus 800 m, de préférence encore d'au plus 600 m.

**7.** Procédé (100) selon une des revendications précédentes, **caractérisé en ce que** la longueur (17a) de la plage de mesure (17) est d'au moins 1 m, de préférence encore d'au moins 5 m, de préférence encore d'au moins 20 m.

**8.** Procédé (100) selon une des revendications précédentes, **caractérisé en ce que** le produit pour chaque paire d'intervalles d'impulsions constants correspond à au moins le double de la longueur (17a) de la plage de mesure (17).

**9.** Procédé (100) selon une des revendications précédentes, **caractérisé en ce que** le produit de toutes les espacements d'impulsions constants correspond à au moins le double de la longueur (17a) de la plage de mesure (17).

**10.** Procédé (100) selon une des revendications précédentes, **caractérisé en ce que** les impulsions de mesure (13) ont une largeur d'impulsion, dans lequel les intervalles d'impulsions constants sont choisis de telle sorte que chaque espacement d'impulsion constant corresponde à un multiple de la largeur d'impulsion.

**11.** Dispositif (10) pour la mesure optique de distance, dans lequel le dispositif (10) est conçu comme un capteur lidar et comprend une unité d'émission (12) pour émettre des impulsions de mesure et une unité de réception (11) pour recevoir des impulsions de mesure réfléchies, dans lequel le dispositif (10) est conçu pour mettre en oeuvre procédé (100) selon une des revendications 1 à 10.

**12.** Produit de programme informatique comprenant un support de mémorisation lisible par ordinateur sur lequel est mémorisé un programme qui, après avoir été chargé dans la mémoire de l'ordinateur, permet à un ordinateur de mettre en oeuvre un procédé (100) selon une quelconque des revendications 1 à 10 en synergie avec un dispositif (10) selon la revendication 11.

**13.** Support de stockage lisible par ordinateur sur lequel est mémorisé un programme qui, après avoir été chargé dans la mémoire de l'ordinateur, permet à un ordinateur de mettre en oeuvre un procédé selon une des revendications 1 à 10 en synergie avec un dispositif (10) selon la revendication 11.

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006063740 A1
- DE 4303804 A1